# EUROPÄISCHE PATENTSCHRIFT

(11) **EP 0 357 880 B1**
(45) Veröffentlichungstag und Bekanntmachung des Hinweises auf die Patenterteilung: **10.08.1994**
(21) Anmeldenummer: 89109584.6
(22) Anmeldetag: 27.05.1989
(51) Int. Cl.: B29B 17/00

(54) **Vorrichtung zur Herstellung von Kunststoffregenerat**
Apparatus for producing reclaimed plastics
Dispositif pour la fabrication de matière plastique régénérée

(30) Priorität: 24.08.1988 DE 3828662
(43) Veröffentlichungstag der Anmeldung: 14.03.1990
(73) Patentinhaber: Priesemuth, Wolfgang, Dipl.-Ing., 25524 Breitenburg-Nordoe (DE)
(72) Erfinder: Priesemuth, Wolfgang, Dipl.-Ing., 25524 Breitenburg-Nordoe (DE)
(74) Vertreter: Barske, Heiko, Dr. rer. nat.

(56) Entgegenhaltungen:
- EP-A- 0 134 977
- EP-A- 0 256 241
- EP-A- 0 275 128
- FR-A- 2 011 458

## Beschreibung

Die Erfindung betrifft eine Vorrichtung zur Herstellung von Kunststoffregenerat, umfassend eine Einrichtung für die Zufuhr von Kunststoffabfall zu einer Preßeinrichtung, in der Kunststoffabfall verdichtbar ist, wobei der verdichtete Kunststoffabfall die Preßeinrichtung durch Löcher hindurchtretend als Kunststoffregenerat verläßt.

Aus der EP-A-0 256 241 ist eine ähnliche Einrichtung zum zerkleinern organischer Materialien bekannt. Es ist das Ziel der bekannten Einrichtung, eine Zerkleinerungvorrichtung zu schaffen, mit welcher der Energieverbrauch für das Zerkleinern weiter vermindert werden kann, wobei die Einrichtung ferner zum Zerkleinern von organischen Materialien universell verwendbar sein soll und mit welcher die physische Belastung des Bedienungspersonals der Einrichtung auf ein Mindestmaß eingeschränkt werden kann. Mit der bekannten Einrichtung soll somit eine Zerkleinerungseinrichtung geschaffen werden, mit der beliebige organische Materialien wie Kunststoffabfälle, frisch belaubte Zweige und Holzabfälle und dergleichen zerkleinert werden können.

Bei der massenweisen Herstellung von Kleinteilen aus Kunststoff wie Schaltergehäusen, Schaltern und diversem anderen Zubehör, die beispielsweise im Kraftfahrzeugbau verwendet werden, fällt bei der Herstellung, beispielsweise unter Anwendung bekannter Kunststoff-Spritzgußverfahren, ein nicht unerheblicher Teil an Kunststoffabfällen an, der grundsätzlich eine wertvollen Rohstoff darstellt. Dieser Rohstoff wurde bisher als Abfall betrachtet und entweder als Müll deponiert oder verbrannt.

In zunehmendem Maße werden aber auch große Teile eines Kraftfahrzeuges, beispielsweise die ein Kraftfahrzeug vorn und hinten begrenzenden Stoßfänger anstelle aus Metall aus Kunststoffen hergestellt. Diese Teile aus Kunststoff, anders als beispielsweise eine Karosserie eines Kraftfahrzeuges, die in der Regel aus metallischen Werkstoffen besteht, unterliegen nicht der natürlichen Korrosion bzw. einer umgebungsbedingten Abnutzung, sondern sind auch nach Erreichen der normalen Lebensdauer eines Kraftfahrzeugs in der Regel unverändert beständig. Diese Großteile aus Kunststoff im Kraftfahrzeugbereich aber auch aus anderen Herstellungsbereichen anderer Gegenstände stellen in zunehmendem Maße ein erhebliches Entsorgungsproblem dar.

Grundsätzlich gilt sowohl für Kunststoffabfall, der bei der Herstellung von Gegenständen aus Kunststoff anfällt, als auch für Gegenstände aus Kunststoff schlechthin, die nicht mehr gebraucht werden, daß sie eine beträchtliche Rohstoffquelle darstellen, die bisher weitgehend nicht genutzt wurde, da zum einen die Notwendigkeit der Wiederverwertung nicht erkannt wurde und andererseits auch adäquate Methoden und Vorrichtungen fehlten, um den Kunststoffabfall kostengünstig in eine wiederverwertbare Form überführen zu können.

Es ist Aufgabe der vorliegenden Erfindung eine Vorrichtung zu schaffen, mit der auf kostengünstige Weise Kunststoffabfall wiederum in eine Form überführt werden kann, die eine uneingeschränkte Wiederverwertung als Kunststoffrohstoff gestattet und die einfach im Aufbau und leicht und kostengünstig ist.

Gelöst wird die Aufgabe gemäß der Erfindung dadurch, daß die Preßeinrichtung eine erste und eine zweite diese mit Wärme beaufschlagende Heizeinrichtung umfaßt, wobei die zweite Heizeinrichtung im wesentlichen im Bereich einer Einmündung der Zuführeinrichtung in die Preßeinrichtung angeordnet ist, und die Löcher in einer Lochscheibe ausgebildet sind.

Der Vorteil der erfindungsgemäßen Vorrichtung liegt im wesentlichen darin, daß prinzipiell über eine Vorzerkleinerung durch die Zuführeinrichtung eine erste Volumenverminderung des Kunststoffabfalls stattfinden kann, daß nachfolgend der vorverdichtete Kunststoffabfall noch einmal durch geeignete Pressung weiter verdichtet wird und daß dabei der verdichtete Kunststoffabfall so erwärmt wird, daß er durch eine Lochscheibe in Form einzelner Kunststoffmaterialstränge hindurchtreten kann, die eine Weiterverarbeitung als als Rohstoff brauchbares Kunststoffregenerat gestatten. Vorteilhafterweise wird der Zylinder und somit das Kunststoffabfallgut schon vorher erwärmt und für die anschließende Pressung in einen plastischen Zustand überführt, nachdem der durch den Schneckenförderer vorverdichtete und ggf. schon vorerwärmte Kunststoffabfall die Zuführeinrichtung verlassen hat. Die Erfindung gestattet darüber hinaus auch eine gleichmäßigere Erwärmung des Zylinderteils, der im wesentlichen bei der Ausführung des Endpreßvorganges des Kunststoffabfalls genutzt wird.

Gemäß einer vorteilhaften Ausgestaltung der Erfindung ist die Zuführeinrichtung nach Art eines angetriebenen Schneckenförderers ausgebildet und weist einen Trichter für die Zufuhr des Kunststoffabfalls auf. Der Trichter ist im wesentlichen rechtwinklig zur Drehachse des Schneckenföderers ausgerichtet, so daß der in den Trichter eingeführte Kunststoffabfall , der ggf. vorher auf passende Stücke mechanisch zerkleinert wurde, durch den Schneckenförderer erfaßt, vorverdichtet und der anschließenden Preßeinrichtung zugeführt werden kann.

Um die über den Trichter der Zuführeinrichtung zugeführten Kunststoffabfallteile, die bei Normaltemperatur eine erhebliche materialbedingte Festigkeit aufweisen können, besser durch den Schneckenförderer vorverdichtbar und transportierbar zu machen, weist gemäß einer vorteilhaften Ausgestaltung der Vorrichtung die Zuführeinrichtung eine diese mit Wärme beaufschlagende Heizeinrichtung auf, die beispielsweise um die Mündung des Trichters in den Raum des Schneckenförderers herum angeordnet sein kann.

Die Preßeinrichtung selbst umfaßt vorzugsweise einen Zylinder und einen darin beweglichen Kolben, so daß das vom Schneckenförderer ankommende vorverdichtete Kunststoffabfallgut noch weiter verdichtet werden kann.

Die Verdichtung des Kunststoffabfalls in der Preßeinrichtung geschieht dadurch, daß der Kolben vorteilhafterweise mittels eines beliebigen Druckmediums in Richtung der Lochscheibe bewegt wird, wobei das Druckmedium ein Gas, beispielsweise Luft, oder auch eine Hydraulikflüssigkeit sein kann. Darüber hinaus ist es ebenfalls denkbar, daß der Kolben beispielsweise mittels einer geeignet mit ihm verbundenen Gewindespindel in Richtung der Lochscheibe und zurück bewegbar ist.

Bei der Betätigung des Kolbens mittels eines Druckmediums ist dieser vorzugsweise mittels Federwirkung in eine der Lochscheibe entgegengesetzte Endstellung überführbar, es ist aber auch denkbar, daß der Kolben in die Ausgangs- bzw. Endstellung nach Ausführung einer Preßarbeit mittels eines Druckmediums überführt wird, das in den Raum des Zylinders eingegeben wird, in dem die Pressung des Kunststoffabfalls stattgefunden hat.

Die Vorrichtung kann schließlich vorzugsweise in Austrittsrichtung des Kunststoffregenerats hinter der Lochscheibe eine Einrichtung zum Zerkleinern des Kunststoffregenerats aufweisen, wobei ggf. auch die Länge der aus der Lochscheibe austretenden Kunststoffstränge beliebig einstellbar ausgebildet sein kann, um es für die spezielle Verwendung geeignet lang vorzubereiten bzw. zu zerkleinern.

Die Zerkleinerungsvorrichtung wird dabei schließlich vorteilhafterweise durch ein motorangetriebenes rotierendes Messer gebildet, es sei aber darauf verwiesen, daß die Zerkleinerungsvorrichtung auch durch beliebige geeignete andere Zerkleinerungsmechanismen gebildet werden kann.

Die Erfindung wird nun unter Bezugnahme auf die nachfolgenden schematischen Zeichnungen anhand eines Ausführungsbeispieles beschrieben. Darin zeigen:

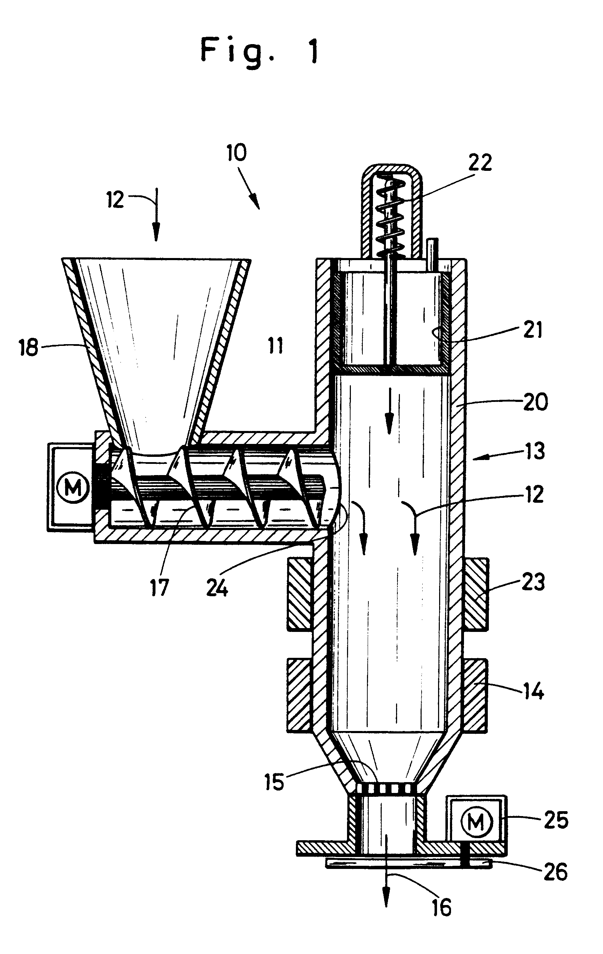

- Fig. 1: im Schnitt eine Vorrichtung zur Herstellung von Kunststoffregenerat, in der lediglich der Preßzylinder mit Heizeinrichtungen versehen ist und

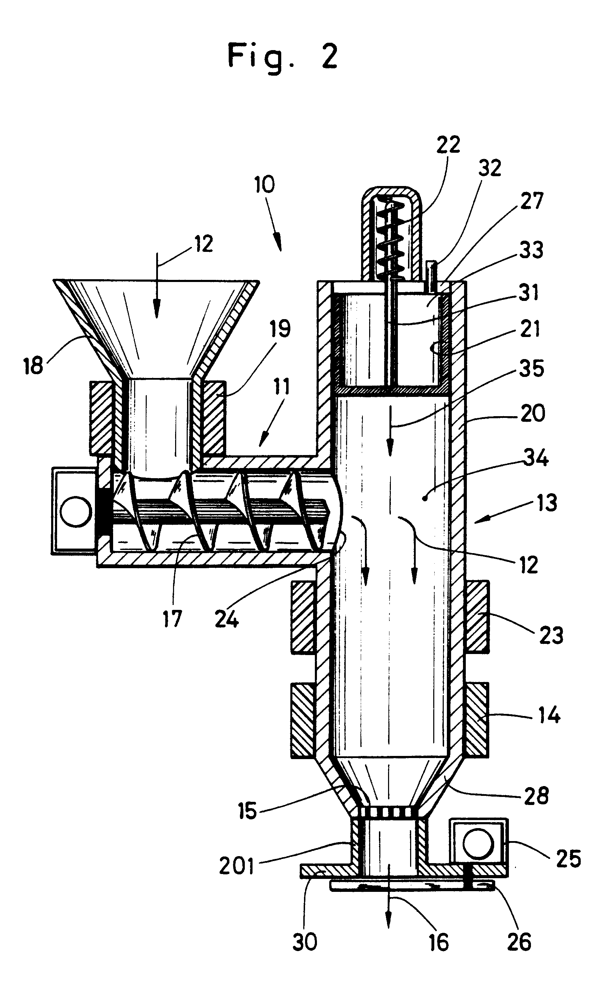

- Fig. 2: eine Vorrichtung zur Herstellung von Kunststoffregenerat, bei der zusätzlich der Kunststoffzufuhrbereich zur Zuführeinrichtung beheizbar ist.

Die Vorrichtung 10 besteht im wesentlichen aus einer Zuführeinrichtung 11 und einer Preßeinrichtung 13, wobei die Zuführeinrichtung eine Einmündung 24 für den Zutritt von vorverdichtetem Kunststoffabfall 12 zur Preßeinrichtung 13 aufweist.

Bei dem hier dargestellten Ausführungsbeispiel besteht die Zuführeinrichtung 11 im wesentlichen aus einem zylindrisch ausgebildeten Gehäuseteil, in dem um eine Achse drehend ein Schneckenförderer 17 bekannter Art angeordnet ist. Der Schneckenförderer wird um seine Achse auf bekannte Weise durch einen mit der Achse verbundenen Motor, der beispielsweise ein Elektromotor sein kann, angetrieben. Im wesentlichen rechtwinklig zur Drehachse des Schneckenförderers 17 ist oberhalb des Gehäuses der Zuführeinrichtung 11 ein Trichter 18 angebracht, durch den Kunststoffabfall 12 dem Schneckenförderer 17 zugeführt werden kann.

Die Preßeinrichtung 13 besteht im wesentlichen aus dem schon erwähnten Zylinder 20, an den im wesentlichen rechtwinklig die Zuführeinrichtung 11 mit ihrem Gehäuse angeschlossen ist. Seitlich im Zylinder 20 ist an geeigneter Stelle ein Loch vorgesehen, das die schon erwähnte Einmündung 24 der Zuführeinrichtung 11 bildet. Der Zylinder 20 weist an seinem einen Ende, das in der in den Figuren dargestellten Stellung das obere Ende bei vertikal verlaufendem Zylinder 20 ist, einen Abschluß 27 in Form eines Deckels und bei gleicher Stellung der Figuren an seinem vertikal unteren Ende eine konische Verjüngung des Zylindermantels auf. Am durchmesserkleinsten Teil der konischen Verjüngung 28 ist eine Lochscheibe 15 angeschlossen, die beispielsweise dort auswechselbar vorgesehen sein kann.

Der Lochscheibe 15 in Richtung des Austritts des Kunststoffregenerats 16 aus der Vorrichtung 10 ist eine Zerkleinerungseinrichtung 25 im wesentlichen parallel beabstandet angeordnet, die mittels eines Motors, beispielsweise eines Elektromotors, angetrieben wird. Der Bereich der Vorrichtung 10 um die Lochscheibe 15 herum in der Verlängerung des Zylinders 20 wird durch einen Rohrteil 29 gebildet, um dessen austrittsseitigen Endflansch 30 ein Messer 26 rotiert, das von der Zerkleinerungseinrichtung 25 angetrieben wird.

Im Zylinder 20 hin und her bewegbar, d. h. gemäß den Darstellungen in vertikaler Richtung nach oben und unten, ist ein Kolben 21 angebracht, der über eine damit verbundene Kolbenstange 31 zumindest teilweise in dem oberen Abschluß 27 des Zylinders 20 geführt wird. Ober einen Anschluß 32 im Abschluß 27 kann ein Druckmedium, beispielsweise ein Gas oder ein Hydraulikflüssigkeit in den ersten Zylinderraum 33 gegeben werden, so daß sich der Kolben 21 entgegen der Kraft einer Feder 22 in Richtung des Pfeiles 35 bewegen kann. Wird die Zufuhr eines Druckmediums zum ersten Zylinderraum unterbrochen bzw. wird das im Zylinderraum 33 befindliche Druckmedium wieder über den Anschluß 32 entfernt, gelangt der Kolben 21 unter dem Einfluß der Feder 22 wieder in seine vertikal obere Stellung im Zylinder 20.

Um den bei vertikaler Ausrichtung des Zylinders 20 unteren Teil sind eine erste Heizeinrichtung 14 und eine dazu beabstandete zweite Heizeinrichtung 23 vorgesehen, die beispielsweise den Zylinder 20 umschließen können. Die Heizeinrichtungen 14 und 23 können beispielsweise elektrisch beheizt werden, es ist aber auch denkbar, beliebige andere zur Verfügung stehende Wärme, beispielsweise Abwärme, dafür zu nutzen.

Eine ähnliche Heizeinrichtung 19 ist um den bei vertikaler Ausrichtung der Vorrichtung 10 unteren Teil des Trichters 18 herum angeordnet und kann ebenfalls entweder elektrisch oder durch beliebige andere zur Verfügung stehende Energie betrieben werden.

Bei der Herstellung von Kunststoffregenerat 16 wird zunächst Kunststoffabfall 12 der Vorrichtung 10 über den Trichter 18 zugeführt, wobei der Kunststoffabfall 12 ggf. vorher mechanisch oder auf beliebige andere geeignete Weise so zerkleinert worden ist, daß er durch den Trichter 18 aufnehmbar ist. Ober eine ggf. im unteren Bereich des Trichters vorgesehene Heizeinrichtung 19 wird der zugeführte Kunststoffabfall 12 erwärmt und nachfolgend mittels des motorangetriebenen Schneckenförderers vorverdichtet und zur Einmündung 24 in den Zylinder 20 transportiert. Der vorverdichtete erwärmte Kunststoffabfall 12 fällt dann in den unteren Raum des Zylinders 20 und wird dort durch die Heizeinrichtung 14 weiter erwärmt, wobei im unmittelbaren Bereich der Einmündung, wie erwähnt, eine weitere Heizeinrichtung 23 vorgesehen sein kann.

Ist eine ausreichende Menge an vorverdichtetem vorerwärmten Kunststoffabfall 12 im unteren Teil des Zylinders 20 vorhanden, wird, wie oben beschrieben, mittels eines Druckmediums der Kolben 21 in Richtung des Pfeiles 35 nach unten bewegt und das sich im zweiten Zylinderraum 34 befindliche Kunststoffabfallgut 12 auf vorbestimmte Weise verdichtet und gleichzeitig über die Heizeinrichtungen 23 und 14 weiter erwärmt. Das plastische, verdichtete Kunststoffabfallgut 12 wird über die an den Zylinder 20 anschließende konische Verjüngung 28 zur Lochscheibe 15 geführt und hindurchgepreßt. Die die Lochscheibe 15 verlassenden einzelnen Stränge des gebildeten Kunststoffregenerats 16 können dann mittels der Zerkleinerungseinrichtung 25 auf eine bestimmte geeignete Länge geschnitten werden, je nach Bedarf und Einsatzart.

Es sei erwähnt, daß der Zyklus der Zufuhr von Kunststoffabfall 12 zur Vorrichtung 10 und der Verdichtungszyklus mittels des Kolbens 21 auf geeignete Weise automatisch gesteuert werden können, so daß prinzipiell die Vorrichtung 10 insgesamt automatisch betrieben werden kann.

## Patentansprüche

1. Vorrichtung (10) zur Herstellung von Kunststoffregenerat (16), umfassend eine Einrichtung (11) für die Zufuhr von Kunststoffabfall (12) zu einer Preßeinrichtung (13), in der Kunststoffabfall (12) verdichtbar ist, wobei der verdichtete Kunststoffabfall (12) die Preßeinrichtung (13) durch Löcher hindurchtretend als Kunststoffregenerat (16) verläßt, dadurch gekennzeichnet, daß die Preßeinrichtung (13) eine erste und zweite diese mit Wärme beaufschlagende Heizeinrichtung (14, 23) umfaßt, wobei die zweite Heizeinrichtung (23) im wesentlichen im Bereich einer Einmündung (24) der Zufuhreinrichtung (11) in die Preßeinrichtung (13) angeordnet ist, und die Löcher in einer Lochscheibe (15) ausgebildet sind.

2. Vorrichtung nach Anspruch 1, dadurch gekennzeichnet, daß die Zufuhreinrichtung (11) nach Art eines angetriebenen Schneckenförderers (17) ausgebildet ist und einen Trichter (18) für die Zufuhr des Kunststoffabfalls (11) aufweist.

3. Vorrichtung nach einem oder beiden der Ansprüche 1 oder 2, dadurch gekennzeichnet, daß die Zufuhreinrichtung (11) eine diese mit Wärme beaufschlagende Heizeinrichtung (19) aufweist.

4. Vorrichtung nach einem oder mehreren der Ansprüche 1 bis 3, dadurch gekennzeichnet, daß die Preßeinrichtung (13) einen Zylinder (20) und einen darin beweglichen Kolben (21) umfaßt.

5. Vorrichtung nach Anspruch 4, dadurch gekennzeichnet, daß der Kolben (21) mittels eines Druckmediums in Richtung der Lochscheibe (15) bewegbar ist.

6. Vorrichtung nach einem oder beiden der Ansprüche 4 oder 5, dadurch gekennzeichnet, daß der Kolben (21) mittels Federwirkung (22) in eine der Lochscheiben (15) entgegengesetzte Endstellung überführbar ist.

7. Vorrichtung nach einem oder mehreren der Ansprüche 1 bis 6, dadurch gekennzeichnet, daß in Austrittsrichtung des Kunststoffregenerats (16) hinter der Lochscheibe (15) eine Einrichtung (25) zum Zerkleinern des Kunststoffregenerats (16) vorgesehen ist.

8. Vorrichtung nach Anspruch 7, dadurch gekennzeichnet, daß die Zerkleinerungseinrichtung (25) durch ein motorangetriebenes rotierendes Messer (26) gebildet wird.

## Claims

1. Device (10) for producing plastics reclaim (16), comprising an apparatus (11) for feeding plastics waste (12) to an extruder apparatus (13) in which the plastics waste (12) can be compacted, the compacted plastics waste (12) leaving the extruder apparatus (13), passing through holes, as plastics reclaim (16), characterized in that the extruder apparatus (13) comprises a first and second heater apparatus (14, 23) subjecting said extruder apparatus (13) to heat, the second heater apparatus (23) being arranged essentially in the region of an entrance (24) of the feed apparatus (11) into the extruder apparatus (13), and the holes being formed in a die plate (15).

2. Device according to Claim 1, characterized in that the feed apparatus (11) is designed in the manner of a driven screw conveyor (17) and has a hopper (18) for the feed of the plastics waste (12).

3. Device according to one or both of Claims 1 and 2, characterized in that the feed apparatus (11) has a heater apparatus (19) subjecting it to heat.

4. Device according to one or more of Claims 1 to 3, characterized in that the extruder apparatus (13) comprises a barrel (20) and a ram (21) which is movable therein.

5. Device according to Claim 4, characterized in that the ram (21) is movable by means of a pressure medium towards the die plate (15).

6. Device according to one or both of Claims 4 and 5, characterized in that the ram (21) can be transferred by means of the action of a spring (22) into an end position opposite the die plate (15).

7. Device according to one or more of Claims 1 to 6, characterized in that an apparatus (25) for comminuting the plastics reclaim (16) is provided downstream of the die plate (15) in the discharge direction of the plastics reclaim (16).

8. Device according to Claim 7, characterized in that the comminution apparatus (25) is formed by a motor-driven rotating knife (26).

## Revendications

1. Dispositif (10) pour fabriquer une matière plastique régénérée (16), comprenant un dispositif (11) pour amener des déchets de matière plastique (12) à un dispositif de pressage (13), dans lequel les déchets de matière plastique (12) peuvent être densifiés, les déchets de matière plastique densifiés (12) quittant, en tant que matière plastique régénérée (16), le dispositif de pressage (13) en passant par des trous, caractérisé en ce que le dispositif de pressage (13) comprend des premier et second dispositifs de chauffage (14, 23) qui appliquent une chaleur au dispositif de pressage, le second dispositif de chauffage (23) étant disposé essentiellement dans la zone d'une embouchure (24) du dispositif d'amenée (11) dans le dispositif de pressage (13), et les trous sont ménagés dans un disque perforé (15).

2. Dispositif selon la revendication 1, caractérisé en ce que le dispositif d'amenée (11) est réalisé à la manière d'un convoyeur à vis entraîné (17) et possède une trémie (18) pour l'amenée des déchets de matière plastique (11).

3. Dispositif selon l'une des revendications 1 ou 2 ou selon ces deux revendications, caractérisé en ce que le dispositif d'amenée (11) possède un dispositif de chauffage (19) qui applique une chaleur à ce dispositif d'amenée.

4. Dispositif selon une ou plusieurs des revendications 1 à 3, caractérisé en ce que le dispositif de pressage (13) comprend un cylindre (20) et un piston (21) mobile à l'intérieur du cylindre.

5. Dispositif selon la revendication 4, caractérisé en ce que le piston (21) est déplaçable au moyen d'un fluide sous pression en direction du disque perforé (15).

6. Dispositif selon l'une des revendications 4 et 5 ou selon ces deux revendications, caractérisé en ce que le piston (21) peut être déplacé, au moyen de l'action d'un ressort (22), dans une position d'extrémité située à l'opposé du disque perforé (15).

7. Dispositif selon une ou plusieurs des revendications 1 à 6, caractérisé en ce qu'un dispositif (25) servant à sectionner la matière plastique régénérée (16) est prévu en arrière du disque perforé (15), dans la direction de sortie de la matière plastique régénérée (16).

8. Dispositif selon la revendication 7, caractérisé en ce que le dispositif de sectionnement (25) est formé par un couteau rotatif (26) entraîné par un moteur.
